# EUROPÄISCHE PATENTSCHRIFT

(11) **EP 1 141 576 B1**
(45) Veröffentlichungstag und Bekanntmachung des Hinweises auf die Patenterteilung: **30.07.2003**
(21) Anmeldenummer: 00901062.0
(22) Anmeldetag: 05.01.2000
(51) Int. Cl.: F16D 69/04

(54) **VERFAHREN ZUR VERBINDUNG EINES SINTERKÖRPERS MIT EINEM METALLISCHEN TRAGERELEMENT**
METHOD FOR CONNECTING A SINTERED BODY TO A METALLIC SUPPORT ELEMENT
PROCEDE DE LIAISON D'UN CORPS FRITTE ET D'UN ELEMENT SUPPORT METALLIQUE

(30) Priorität: 08.01.1999 DE 19900388
(43) Veröffentlichungstag der Anmeldung: 10.10.2001
(73) Patentinhaber: GKN Sinter Metals GmbH, 42477 Radevormwald (DE)
(72) Erfinder: DOLLMEIER, Klaus, D-58332 Schwelm (DE); WAHNSCHAFFE, Jens, D-51107 Köln (DE)
(74) Vertreter: Patentanwälte Maxton & Langmaack
(86) Internationale Anmeldenummer: EP0000040
(87) Internationale Veröffentlichungsnummer: WO00040873

(56) Entgegenhaltungen:
- WO-A-95/27153
- GB-A- 1 345 847
- US-A- 4 456 578

## Beschreibung

Aus WO 95/27153 ist eine schaltbare Kupplung, insbesondere eine schaltbare Kupplung für Kraftfahrzeuge bekannt, die neben einer mit einem organischen Reibbelag belegten Kupplungsscheibe einen Gegenläufer und eine Druckplatte aufweist, die jeweils mit einem Reibbelag aus einem pulvermetallurgischen Sinterwerkstoff belegt sind. Der pulvermetallurgische Sinterwerkstoff besteht hierbei im wesentlichen aus einem Eisenwerkstoff, der mit entsprechenden Hartpartikeln als Reibstützern versetzt ist und der daneben einen Anteil von 10 bis 15 Gewichts-% an Kupfer aufweist. Ein aus einem pulvermetallurgischen Sinterwerkstoff hergestelltes Reibmaterial besitzt eine gewisse Porosität, die sich günstig auf das Reibverhalten der fertigen Kupplung auswirkt. Hierbei hat sich ferner herausgestellt, daß sich die auf der im wesentlichen metallischen Reibfläche vorhandene Porosität nicht so leicht mit dem Abrieb des organischen Reibbelages zusetzt. Bei der vorbekannten Kupplung ist neben einer lösbaren Befestigung fertig gesinterter Sinterkörper auch die Möglichkeit vorgesehen, auf den Gegenläufer bzw. die Druckplatte, nachstehend Trägerelement genannt, als Reibbelagschicht unmittelbar aufzusintern. Bei einem Aufsintern einer Reibbelagschicht unmittelbar auf ein metallisches Trägerelement, läßt die zu erzielende Festigkeit der Verbindung bei höheren Lastanforderungen zu wünschen übrig. Für den vorbeschriebenen Anwendungsfall einer Kupplung reicht die erzielbare Festigkeit zur Übertragung eines Drehmomentes nicht aus.

GB 1345847 offenbart ein Verfahren zur Herstellung von Reibungskörpern, bei welchen allgemein ein pulverförmiger Sinterwerkstoff mit einer pulverförmigen Schicht Kupfer auf ein Trägerelement gesintert wird.

Der Erfindung liegt die Aufgabe zugrunde, ein Verfahren zu schaffen, das es ermöglicht, mit einem metallischen Trägerelement einen pulvermetallurgischen Sinterkörper fest zu verbinden.

Zur Lösung der gestellten Aufgabe, der Verbindung eines Trägerelementes aus Metall mit wenigstens einem Körper aus einem pulvermetallurgischen Sinterwerkstoff, ist erfindungsgemäß vorgesehen, daß der Körper als aus einem sintermetallurgischen Pulver gepreßter Grünkörper mit dem Trägerelement in Kontakt gebracht wird, daß mit dem Grünkörper jeweils ein dünner, flächiger Kupferkörper in Kontakt gebracht wird und daß die so gebildete Gesamtanordnung auf die für die Sinterung des Grünkörpers erforderliche Temperatur erhitzt und nach Abschluß des Sintervorgangs wieder abgekühlt wird. Bei diesem Verfahren hat sich überraschenderweise herausgestellt, daß der auf den Grünkörper aufgebrachte Kupferkörper schmilzt und durch die Poren des Grünkörpers nach dem Einsetzen des Sintervorgangs hindurchfließt und im Kontaktbereich zwischen dem Grünkörper und dem Trägerelement wiederum als geschlossene Kupferschicht nach Art eines Lotes verschießt und nach Abschluß der Sinterung des Grünkörpers zu einem stabilen Sinterkörper führt und nach Abkühlung der Gesamtanordnung den Sinterkörper mit dem Trägerelement fest verbindet. Damit ist es möglich, ein Trägerelement einerseits mit Sinterkörpern von hoher Festigkeit zu versehen und andererseits die Verbindung der Sinterkörper mit dem Trägerelement "in einer Hitze", d. h. beim Sintern des Grünkörpers nach Art eines Hartlötens zu bewirken. Der weitere Vorteil besteht darin, daß in bezug auf das Material des Trägerelementes keine besonderen Anforderungen zu stellen sind, so daß es auch möglich ist, Sinterkörper mit einem Trägerelement aus Grauguß, beispielsweise lamellarem Grauguß, zu verbinden. Kontakt zwischen den einzelnen Teilen kann beispielsweise dadurch bewirkt werden, daß die Teile aufeinandergelegt werden. Hierbei kann auch das Trägerelement als letztes aufgelegt werden.

In besonders vorteilhafter Ausgestaltung der Erfindung ist vorgesehen, daß für den Grünkörper ein im wesentlichen kupferfreies Sinterpulver verwendet wird. Zweckmäßig ist es hierbei, wenn der Grünkörper im wesentlichen durch eine Mischung aus einem Eisenpulver und pulverförmigen Zuschlagstoffen zusammengesetzt ist. Ein derart zusammengesetzter Grünkörper und nach dem Sintern hieraus gebildeter Sinterkörper bietet den Vorteil, daß das Sinterpulver ausschließlich in bezug auf die Anforderungen hinsichtlich Festigkeit und weiterer Anforderungen zur Erzielung besonderer Eigenschaften im Hinblick auf den Einsatzzweck zusammengesetzt werden kann, wobei das Eisenpulver auch ein legiertes Eisenpulver sein kann. So ist es beispielsweise für gesinterte Reibkörper möglich, als "Anschlagstoffe" Reibstützer durch entsprechendes Hartmaterial, wie beispielsweise Metallcarbide oder dergleichen zuzugeben. In der Praxis hat sich überraschend herausgestellt, daß ein aus einem kupferfreien Sinterpulver hergestellter Reibkörper, der nach dem erfindungsgemäßen Verfahren mit dem Trägerelement beim Sintervorgang nach Art eines Hartlötens verbunden worden ist, beispielsweise für ein Element an schaltbaren Kupplungen ein deutlich besseres Reibverhalten aufweist, als die nach dem herkömmlichen Verfahren aus einem kupferhaltigen Eisensinterpulver hergestellten Reibkörper. Dies ist nach den bisherigen Erkenntnissen darauf zurückzuführen, daß der auf den Grünkörper auf kupferfreiem Sinterpulver aufgebrachte Kupferkörper noch vor dem Einsetzen des Sintervorgangs schmilzt und weitgehend durch die Poren des Grünkörpers hindurchfließt und beim Durchdringen der Porenstruktur lediglich die freie Oberfläche der bereits angesinterten Matrix des gesinterten Reibkörpers benetzt, so daß, anders als bei einem Grünkörper mit beigemischten Kupferanteilen im Metallpulver, eine bessere Maßhaltung gegeben ist.

In Ausgestaltung der Erfindung ist ferner vorgesehen, daß für den Kupferkörper im wesentlichen reines Kupfer verwendet wird. In vorteilhafter weiterer Ausgestaltung der Erfindung ist vorgesehen, daß für den Kupferkörper ein legiertes Kupfer verwendet wird. Als Legierungsbestandteile werden bevorzugt solche Metalle verwendet, die ein Benetzen der Oberfläche der im wesentlichen durch Eisen gebildeten Matrix des Sinterkörpers bewirken. Der Kupferkörper kann durch ein Blech aus gediegenem Metall oder durch einen Preßling aus Kupferpulver gebildet werden. Bei dem Einsatz eines Preßlings besteht die Möglichkeit, dem Kupferpulver noch andere Pulverbestandteile, beispielsweise ein Eisenpulver und ein Manganpulver oder ein magnganlegiertes Eisenpulver zuzumischen, so daß die Benetzungsfähigkeit der aus dem Kupferkörper entstehenden Schmelze in bezug auf die Oberfläche der Matrix des Sinterkörpers verbessert wird.

In Ausgestaltung der Erfindung ist vorgesehen, daß die Dicke des Kupferkörpers mindestens 10% der Dicke des Grünkörpers beträgt. In Ausgestaltung der Erfindung ist auch vorgesehen, daß der Kupfergehalt des Kupferkörpers mindestens 20 Gewichts-%, bezogen auf das Gewicht des Grünkörpers, beträgt. Bei der Bemessung der Kupfermenge muß auch die Porosität des Sinterkörpers berücksichtigt werden, da Sinterkörper mit größerem Porenvolumen ein Teil der Kupfermenge in der Porenstruktur halten, so daß durch eine entsprechend größere Kupfermenge das "Durchfließen" bis auf die Fläche des Trägerelementes gewährleistet ist.

Die Erfindung wird anhand von schematischen Zeichnungen für den Anwendungsfall einer Schaltkupplung näher erläutert. Es zeigen:

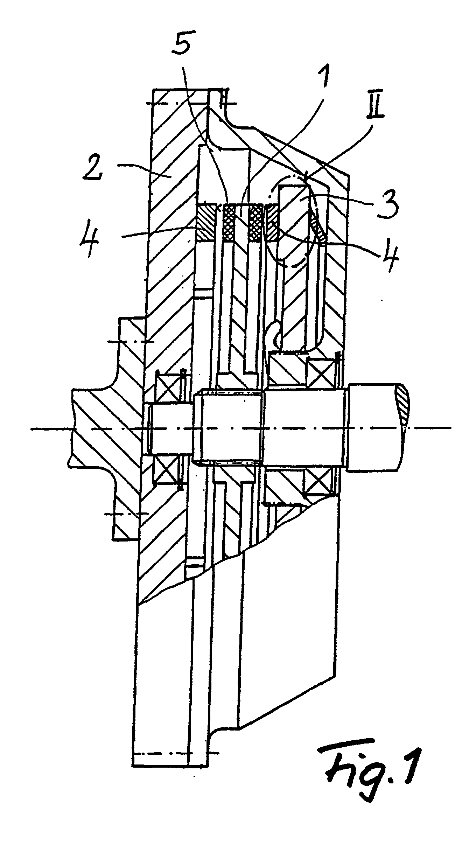

- Fig. 1: eine schaltbare Kupplung, teilweise.im Schnitt,
- Fig. 2: in größerem Maßstab einen Teilschnitt entsprechend dem Detail II in Fig. 1 durch ein Trägerelement mit aufgelegtem Grünkörper vor Durchführung des Sintervorgangs,
- Fig. 3: im Teilschnitt entsprechend Fig. 2 das Trägerelement mit fertig gesintertem Sinterkörper,
- Fig. 4: im Teilschnitt entsprechend Fig. 3 eine Ausführungsform mit einer sich nur über eine Teilfläche erstreckenden Verbindung.

Die in der Zeichnung dargestellte Kupplung weist eine Kupplungsscheibe 1, einen Gegenläufer 2 und eine Druckplatte 3 auf. Die Konstruktion und die Anordnung der einzelnen Bauelemente der Kupplung entspricht im wesentlichen dem Aufbau einer üblichen schaltbaren Einscheiben-Trockenkupplung und wird daher im folgenden nicht näher erläutert. Insbesondere sind in der Zeichnung die Betätigungsmittel für die Druckplatte 3 nicht näher dargestellt.

Am Gegenläufer 2 und an der Druckplatte 3, nachstehend beide als Trägerelement 3 bezeichnet, sind Sinterkörper 4 angeordnet, die mit den an beiden Seiten der Kupplungsscheibe 1 angeordneten Reibbelägen 5, beispielsweise aus organischem Reibmaterial, zusammenwirken. Die Sinterkörper 4 können aus mehreren in Umfangsrichtung auf den Trägerelementen 3 angeordneten Einzelkörpern bestehen oder aber auch durch jeweils ein einzelnes ringförmiges Reibelement gebildet werden.

Die Sinterkörper 4 bestehen aus einem pulvermetallurgischen Sinterwerkstoff auf Eisenbasis, wobei vorzugsweise Hartpartikel als sogenannte Reibstützer in den Sinterkörper 4 eingesintert sind.

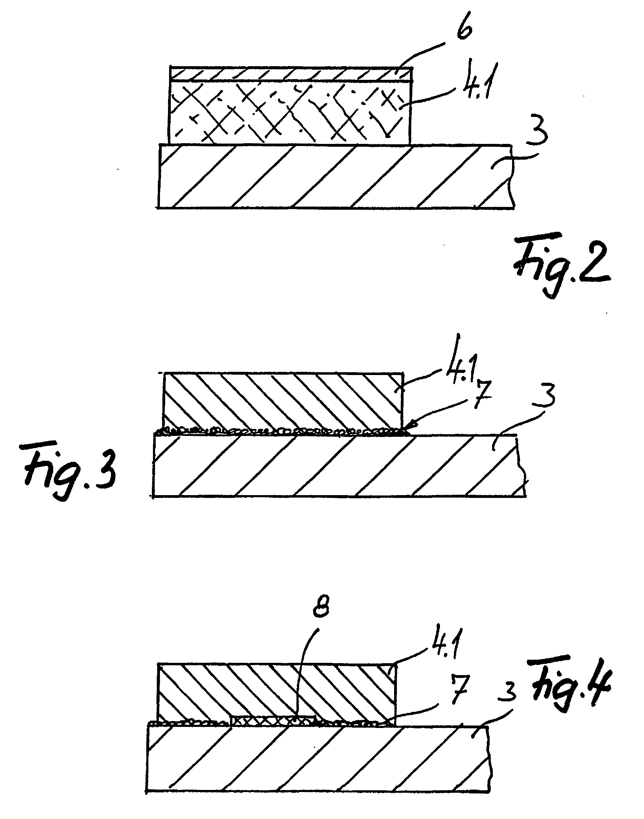

Wie aus Fig. 2 und 3 ersichtlich, werden zur Herstellung als metallisches Trägerelement 3 eine Trägerscheibe, die beispielsweise aus Grauguß, beispielsweise lamellarem Grauguß, bestehen kann, in horizontaler Ausrichtung positioniert und daran anschließend die aus einem Metallsinterpulver gepreßten Grünkörper 4.1 zur Herstellung der Sinterkörper 4 lose aufgelegt, die hier als Reibkörper konzipiert sind. Die Grünkörper 4.1 sind aus einem praktisch kupferfreien, mit Hartpartikeln versetzten Eisenpulver gepreßt. Auf die Grünkörper 4.1 wird anschließend ein Kupferkörper 6 aufgelegt, der zumindest teilweise die Fläche des Grünkörpers 4.1 bedeckt und der in seiner Umfangskontur im wesentlichen der Umfangskontur des Grünkörpers 4.1 entspricht. Der Kupferkörper 6 kann als Kupferblech aus gediegenem Kupfer ausgestanzt sein oder aber auch durch einen entsprechend dimensionierten Preßling aus Kupferpulver bestehen. Hierbei kann es zweckmäßig sein,, wenn für den Preßling kein reines Kupfer verwendet wird sondern das Kupfer mit den Schmelzpunkt herabsetzenden Zusätzen versetzt ist. Beispielsweise ist es zweckmäßig, wenn ein gewisser Anteil an Eisenpulver und Manganpulver im Preßling enthalten ist, der - wie nachstehend noch näher erläutert - die Benetzung zwischen der Sinterkörpermatrix und dem Kupfer verbessert. Zweckmäßig kann ein Zusatz von Fe mit 2,4 Gewichts-% und Manganpulver mit 1 Gewichts-% sein, jeweils bezogen auf das Gewicht des Kupferanteils.

Das so bestückte Trägerelement 3 wird anschließend in einem Sinterofen auf Sintertemperatur aufgeheizt und solange auf Sintertemperatur gehalten, bis der Grünkörper 4.1 fertig gesintert ist. Bei dieser Temperaturbehandlung wird der Grünkörper zuerst angesintert, danach schmilzt der auf dem Grünkörper 4.1 aufliegende Kupferkörper 6. Infolge der Porosität des Grünkörpers 4.1 durchdringt das flüssige Kupfer die Grünkörpermatrix schon nach Beginn der Sinterung und verschießt bei entsprechende Mengenbemessung des Kupferkörpers nach Art eines Lotes im Kontaktbereich zwischen dem Grünkörper 4.1 und dem Trägerelement 3. Nach Fertigsinterung und Abkühlung dem Trägerelement ist der fertig gesinterte Sinterkörper 4 auf dem Trägerelement 3 durch eine entsprechende, als Hartlot wirkende Verbindungsschicht 7 fest miteinander verbunden. Beim Durchfließen der Poren werden die freien Oberflächen der angesinterten Matrix mit Kupfer benetzt, so daß nach dem Abkühlen die Sinterkörpermatrix in ihren Porenbereichen mit einer dünnen Kupferbeschichtung versehen ist,und der Sinterkörper praktisch keinen Vezug und eine gute Maßstabilität aufweist.

Die Erfindung ist nicht auf den vorbeschriebenen Anwendungsfall zur Herstellung einer Druckplatte und/oder eines Gegenläufers einer schaltbaren Kupplung beschränkt. Sie ist vielmehr anwendbar für alle Einsatzfälle, bei denen auf einem metallischen Trägerelement ein oder mehrere Sinterkörper zu befestigen sind, und an die Verbindungen auch hohe Anforderungen hinsichtlich der Festigkeit zu stellen sind.

Es ist ferner möglich, durch entsprechende nicht-sinternde feste oder durch ein zonenweises Beschichten mit einem Trennmittel, beispielsweise einer Bornitrid-Suspension oder einer Mluminiumoxid-Suspension, erstellte Zwischenlagen 8 Aussparungen oder dergl. in Teilbereichen des Kontaktes zwischen Trägerelement 3 und Grünkörper 4.1 zu schaffen, so daß statt eines vollflächigen Verbundes eine Verbindungsschicht 7 entsteht, die sich nur über entsprechende Teilflächen des Überdeckungsbereichs erstreckt, wie dies in Fig. 4 angedeutet ist.

## Patentansprüche

1. Verfahren zur Verbindung eines Trägerelementes (3) aus Metall mit wenigstens einem Körper (4) aus einem pulvermetallurgischen Sinterwerkstoff, **dadurch gekennzeichnet, daß** der Körper (4) als aus einem Sinterpulver gepreßter Grünkörper (4.1) mit dem Trägerelement (3) in Kontakt gebracht wird, daß mit dem Grünkörper (4.1) jeweils ein dünner, flächiger Kupferkörper (6) in Kontakt gebracht wird und daß die so ausgebildete Gesamtanordnung auf die für die Sinterung des Grünkörpers (4.1) erforderliche Temperatur erhitzt und nach dem Abschluß des Sintervorgangs wieder abgekühlt wird.

2. Verfahren nach Anspruch 1, **dadurch gekennzeichnet, daß** für den Grünkörper (4.1) ein im wesentlichen kupferfreies Sinterpulver verwendet wird.

3. Verfahren nach Anspruch 1 oder 2, **dadurch gekennzeichnet, daß** der Grünkörper (4.1) im wesentlichen durch eine Mischung aus einem Eisenpulver und pulverförmigen Reibstützern zusammengesetzt ist.

4. Verfahren nach einem der Ansprüche 1 bis 3, **dadurch gekennzeichnet, daß** für den Kupferkörper (6) im wesentlichen reines Kupfer verwendet wird.

5. Verfahren nach einem der Ansprüche 1 bis 3, **dadurch gekennzeichnet, daß** für den Kupferkörper (6) legiertes Kupfer verwendet wird.

6. Verfahren nach einem der Ansprüche 1 bis 5, **dadurch gekennzeichnet, daß** der Kupferkörper (6) aus einem Blech besteht.

7. Verfahren nach einem der Ansprüche 1 bis 5, **dadurch gekennzeichnet, daß** der Kupferkörper (6) durch einen Pulverpreßling gebildet wird.

8. Verfahren nach einem der Ansprüche 1 bis 7, **dadurch gekennzeichnet, daß** die Dicke des Kupferkörpers (6) mindestens 10% der Dicke des Grünkörpers (4.1) beträgt.

9. Verfahren nach einem der Ansprüche 1 bis 3 und 5 bis 8, **dadurch gekennzeichnet, daß** der Kupfergehalt des Kupferkörpers (6) mindestens 15 Gewichts-%. bezogen auf das Gewicht des Grünkörpers (4.1) beträgt.

10. Verfahren nach einem der Ansprüche 1 bis 9, **dadurch gekennzeichnet, daß** in Teilbereichen des Kontaktes zwischen Grünkörper (4.1) und Trägerelement (3) nicht-sinternde Zwischenlagen vorgesehen werden.

11. Körper (4), insbesondere Reibkörper, mit einem Trägerelement (3), insbesondere Trägerscheibe, hergestellt gemäß einem der Ansprüche 1 bis 10.

## Claims

1. A process to connect a support element (3) made of metal to at least one member (4) made of a powder-metallurgical sinter material, **characterized in that** said member (4) in the form of a green compact (4.1) pressed of a sintering powder is brought into contact with said support element (3), **in that** in any given case a thin, flat copper member (6) is brought into contact with said green compact (4.1) and **in that** the thus formed overall arrangement is heated to the temperature required to sinter said green compact (4.1), and after completion of the sintering process is cooled down again.

2. A process according to Claim 1, **characterized in that** an essentially copper-free sintering powder is used for said green compact (4.1).

3. A process according to Claim 1 or 2, **characterized in that** said green compact (4.1) is made up essentially of a mixture of an iron powder and powdered friction supports.

4. A process according to any of the Claims 1 through 3, **characterized in that** for said copper member (6) essentially pure copper is used.

5. A process according to any of the Claims 1 through 3, **characterized in that** for said copper member (6) alloyed copper is used.

6. A process according to any of the Claims 1 through 5, **characterized in that** said copper member (6) consists of a sheet.

7. A process according to any of the Claims 1 through 5, **characterized in that** said copper member (6) consists of a compacted powder body.

8. A process according to any of the Claims 1 through 7, **characterized in that** the thickness of said copper member (6) amounts to at least 10% of the thickness of said green compact (4.1).

9. A process according to any of the Claims 1 through 3 and 5, **characterized in that** the copper content of said copper member (6) amounts to at least 15-weight % in relation to the weight of said green compact (4.1).

10. A process according to any of the Claims 1 through 9, **characterized in that** in partial areas of contact between said green compact (4.1) and said support element (3), non-sintering intermediate layers are provided.

11. Members (4), in particular friction members, with a support element (3), in particular a support disk, manufactured according to any of the Claims 1 through 10.

## Revendications

1. Procédé de liaison d'un élément support (3) en métal avec au moins un corps (4) d'un matériau fritté par métallurgie des poudres, **caractérisé en ce que** le corps (4) sous la forme d'un corps brut (4.1) pressé en poudre frittée est mis en contact avec l'élément support (3), **en ce que** respectivement un corps en cuivre (6) plan mince est mis en contact avec le corps brut (4.1), et **en ce que** l'ensemble ainsi constitué est chauffé à la température nécessaire pour le frittage du corps brut (4.1) puis refroidi à la fin du processus de frittage.

2. Procédé selon la revendication 1, **caractérisé en ce que** pour le corps brut (4.1) on utilise une poudre frittée pour l'essentiel sans cuivre.

3. Procédé selon la revendication 1 ou 2, **caractérisé en ce que** le corps brut (4.1) est composé pour l'essentiel d'un mélange d'une poudre de fer et de supports de friction poudreux.

4. Procédé selon l'une quelconque des revendications 1 à 3, **caractérisé en ce que** pour le corps en cuivre (6) on utilise pour l'essentiel du cuivre pur.

5. Procédé selon l'une quelconque des revendications 1 à 3, **caractérisé en ce que** pour le corps en cuivre (6) on utilise du cuivre allié.

6. Procédé selon l'une quelconque des revendications 1 à 5, **caractérisé en ce que** le corps en cuivre (6) est formé par une tôle.

7. Procédé selon l'une quelconque des revendications 1 à 5, **caractérisé en ce que** le corps en cuivre (6) est formé par un comprimé de poudre.

8. Procédé selon l'une quelconque des revendications 1 à 7, **caractérisé en ce que** l'épaisseur du corps en cuivre (6) est au moins égale à 10% de l'épaisseur du corps brut (4.1).

9. Procédé selon l'une des revendication 1 à 3 et 5 à 8, **caractérisé en ce que** la teneur en cuivre du corps en cuivre (6) est au moins de 15 % en poids par rapport au poids du corps brut (4.1).

10. Procédé selon l'une quelconque des revendications 1 à 9, **caractérisé en ce que** dans des zones partielles de contact entre le corps brut (4.1) et l'élément support (3) des couches intermédiaires sans frittage sont prévues.

11. Corps (4), notamment corps de friction, avec un élément support (3), notamment un disque de support, réalisé selon l'une quelconque des revendications 1 à 10.
